# EUROPEAN PATENT APPLICATION

(11) **EP 3 578 691 A1**
(43) Date of publication of application: **11.12.2019**
(21) Application number: 19178378.6
(22) Date of filing: 05.06.2019
(51) Int. Cl.: C25C 3/00, C25C 7/00, G01N 27/411

(54) **METHODS FOR REDUCING THE CORROSIVENESS OF A FLUID MATERIAL FOR A HIGH-TEMPERATURE RANGE AND DEVICES THEREFORE**

(30) Priority: 08.06.2018 US 201816003229
(71) Applicant: Deutsches Zentrum für Luft- und Raumfahrt e.V., 51147 Köln (DE)
(72) Inventor: DING, Wenjin, 51147 Köln (DE); BAUER, Thomas, 51147 Köln (DE); VIDAL, Judith Cecilia, 80401 Golden, Colorado (US)
(74) Representative: dompatent von Kreisler Selting Werner - Partnerschaft von Patent- und Rechtsanwälten mbB

(57) **Abstract**

The present application refers to a method for the reduction of the corrosiveness of a heat storage or heat transfer fluid material for the high-temperature range and a device for said method. The respective heat storage or heat transfer fluid material obtained by the method may be used in solar thermal power plants, conventional fossil power plants with higher flexibility, pumped thermal energy storage, combined heat and power plants, intermediate storage of high-temperature process heat, or in sensible heat storage with molten salts.

## Description

### Field of the Invention

The present invention relates generally to methods and devices for the reduction of impurities in molten halogen salts, wherein the molten salt is purified in an electrochemical process under inert atmosphere and the electrochemical process comprises applying a voltage between an anode and a cathode.

### Background of the Invention

Molten salts have been used commercially for some years in solar thermal power plants and make it possible to transfer and store thermal energy for power plants on a large scale economically. The heat transfer and storage medium currently used in solar thermal power plants is often a mixture of two nitrate salts (so-called Solar Salt, being a mixture of 40wt% potassium nitrate and 60wt% sodium nitrate). This mixture has a defined operating range with respect to the minimum temperature (due to melting temperature) and the maximum temperature (due to thermal decomposition). The maximum working temperature of Solar Salt is limited to approximately 560 °C due to thermal decomposition. Molten salts with higher maximum working temperatures may significantly improve the efficiencies of downstream processes in concentrating solar power plants (e.g., in steam cycles for power generation), as well as provide options for high temperature heat transfer fluids in other industrial applications.

Therefore, there is a need to provide methods of reducing the corrosiveness of high-temperature heat-storage materials being more effective than the incumbent technologies.

### Brief Summary of the Invention

An aspect of the present disclosure includes methods for the reduction of impurities in molten halogen salts, wherein the molten salt is purified in an electrochemical process under inert atmosphere, said electrochemical process comprising applying a voltage between an anode and a cathode said voltage being compared to the voltage at a reference electrode. In some embodiments, the halogen salt may be a chloride salt. The cation of the halogen salt may be selected from Mg, Ca, Na, K, Li, Sr, Ba, Zn, Al, Sn, Fe, Cr, Mn, or Ni. The halogen salt may be a mixture of two or more different halogen salts. In some embodiments, the temperature of the molten salt at which the electrochemical process takes place may be within a range of from 300 °C to 800 °C. The inert atmosphere may be nitrogen or argon.

In some embodiments, the material for an anode in the electrochemical process may be selected from an alkali metal, an alkaline earth metal, a transition metal, or a metalloid. The material for an anode in the electrochemical process may be an alkaline earth metal such as Mg. The material for the reference electrode for the electrochemical process may be selected from tungsten, silver, gold, platinum, palladium, or nickel-alloys. The cathode may be solid or liquid at the temperature at which the electrochemical process takes place. The material for the cathode may be selected from tungsten, silver, gold, platinum, palladium, or nickel-alloys. In some embodiments, the construction material of a container in which the electrochemical reaction takes place acts as cathode. The construction material may be selected from 1.44xx, 1.45xx, 1.78xx, or 2.xxxx alloys.

In some embodiments, the over-potential may be applied periodically or constant. The molten salt may be purified prior to feeding it into a tank. The molten salt may be purified during operation inside the storage tank. The molten salt may be purified when flowing in or out of the storage tank. In some embodiments, the purification may take place in a flow of the molten halogen salt.

In some embodiments, the method may include controlling the effort of the electrochemical process. The control may be done via cyclic voltammetry measurement. The control may be done in situ.

An aspect of the present disclosure includes a device for the purification of molten halogen salts as high-temperature heat storage or heat transfer fluid material comprising at least one cyclic voltammetry measurement (CVM) device and at least one electrochemical purification (ECP) device, said electrochemical purification device comprising an anode, a cathode, and a reference electrode. In some embodiments, the device for the purification of molten halogen salts may comprise two CVM devices, wherein the first CVM device is located on one side of the ECP device and the second CVM device is located on the opposite side of the ECP device. The device may further comprise gravimetric drainage. The device may include one or more of a heat exchanger, a temperature control unit, and/or a cold trap for molten salt. The electrodes of the ECP may be in the form of rods, plates, meshes, or perforated plates.

### Brief Description of the Drawings

The present invention is illustrated and described herein with reference to the drawing, in which like reference numbers denote like method steps and/or system components, respectively, and in which:
Figure 1A is a graph representing cyclic voltammetry with a tungsten working electrode;
Figure 1B is a graph representing a cyclic voltammetry with a glassy carbon working electrode;
Figure 2A is a schematic diagram of a concentrated solar power plant;
Figure 2B is a schematic diagram showing one embodiment of the present invention;
Figure 3 is a schematic diagram of an autoclave apparatus;
Figure 4A is a graph showing the peak representing the reduction of MgOH⁺ to MgO and H²;
Figure 4B is a graph representing the peak current for the reduction of MgOH⁺;
Figure 5 is a graph showing the over-potential v time of the electrochemical salt purification;
Figure 6A is a graph showing the cyclic voltammetry of unpurified salt;
Figure 6B is a graph showing the cyclic voltammetry of the salt purified electrochemically using bulk magnesium as the anode;
Figure 7A is a graph showing the potentiodynamic polarization curves of Incoloy 800Hin the unpurified salts; and
Figure 7B is a graph showing the potentiodynamic polarization curves of Incoloy 800Hin in the purified salts.

### Detailed Description of the Invention

The present disclosure relates to molten chlorides, which in some embodiments, may provide promising alternative thermal energy storage (TES) materials to be applied in concentrated solar power (CSP) plants owing to their higher thermal stability (stable at >800 °C) than commercial TES materials - nitrate salt mixtures (decomposed at ∼560 °C). Higher operating temperatures of TES may increase efficiencies of thermal into electrical energy conversion for CSP power plants, but also may cause additional challenges, for example, increasing the corrosion of metal containers and structural materials exposed to the molten chlorides. The corrosion rates of such structural materials depend significantly on the concentration of corrosive hydroxide impurities present in the molten chlorides.

This application relates to the subjects of thermal energy storage and heat transfer fluids at high temperatures, specifically to molten salts. The present disclosure may extend the maximum working temperature to above 700 °C by the use of alternative molten salt mixtures in comparison to Solar Salt. The herein disclosed salts have the advantage compared to Solar Salt in that they may be used also at temperatures above 560 °C, including the range of 700 °C to 1000 °C. One objective of the present disclosure is to minimize impurities in a molten halogen salt in order to achieve acceptable metallic corrosion rates. Surprisingly, it has been found that an electrochemical treatment of the molten halogen salt leads to a salt purification. This reduction of the impurities leads to a reduced corrosiveness of the molten salt.

The present application refers to methods for the reduction of the corrosiveness of a heat storage or heat transfer fluid material for the high-temperature range and devices for said methods. The respective heat storage or heat transfer fluid material obtained by the methods may be used in solar thermal power plants, conventional fossil power plants with higher flexibility, pumped thermal energy storage, combined heat and power plants, intermediate storage of high-temperature process heat, or in sensible heat storage with molten salts.

Thus, in some embodiments of the present disclosure relate to methods for the reduction of impurities in molten halogen salts, where the molten salt is purified in an electrochemical process under inert atmosphere.

A halogen salt according to the present application may be a halogen salt that contains at least one of fluoride, chlorine, bromine, and/or iodine. For example, a halogen salt may be a chloride salt. Chloride salts are usually cheaper than other salts so that the method according to the present disclosure is cost effective. Further, suitable chloride salts can easily be handled also in large amounts, as they are non-toxic and do not have any other harmful impact on security or health of persons handling the material. However, other halogen salts fall within the scope of the present disclosure.

The charge balancing cation of the halogen salt may be any, as long as the salt is stable at high temperatures, i.e. at temperatures above 700 °C especially up to 1000 °C, so that the salt is stable to be used e.g., in solar thermal power plants, fossil power plants, pumped thermal energy storage, combined heat and power plants, intermediate storage of high-temperature process heat or in the area of sensible heat storage with molten salts without decomposition. for example, the cation of the halogen salt may include at least one of Mg, Ca, Na, K, Li, Sr, Ba, Zn, Al, Sn, Fe, Cr, Mn, /or Ni. In some embodiments, the cation may include at least one of Mg, Ca, Na, and/or K. In some embodiments of the present disclosure, the molten salt may include at least one of MgCl₂, CaCl₂, NaCl, and/or KCl.

The halogen salt used according to the present disclosure may include a mixture of two or more salts. This enables a molten salt to be specifically designed for any particular high temperature application. Melting temperature, heat capacity, vapor pressure as well as costs can influence which salts are used. The melting temperature, heat capacity, and vapor pressure are the properties which then define the properties of the salt mixture, (the molten salt which is finally used in the high temperature process). When using a mixture, the melting temperature, heat capacity and vapor pressure of the mixture may be clearly defined by choosing a respective salt in defined mixtures.

In some embodiments of the present disclosure, a method for purifying a molten salt may include exposing the molten salt to a vacuum prior to the electrochemical process. This vacuum may be maintained at an elevated temperature in the range of 50 °C to 300 °C. In some embodiments, the temperature may be between 80 °C and 250 °C. In still other embodiments the temperature may be between 100 °C and 200 °C to enable the dehydration of the halogen salt.
The dehydration by vacuum may reduce the amount of impurities. However, the amount of impurities may still be unacceptably high. Thus, some embodiments of the present disclosure may include electrochemical treating of the dehydrated molten salt. In some cases, such electrochemical processing may significantly reduce the impurities, so that at least 95% impurities present in the original starting molten salt may be removed. This leads to a significant reduction of the corrosion rate in metallic alloys. Those were tested for a nickel-based alloy, namely Incoloy® 800H at 700 °C. Incoloy® 800H is an alloy with the composition (in weight-%) shown in Table 1.

**Table 1**

| Alloy | Fe | Ni | Cr | Mn | Si | C |
|---|---|---|---|---|---|---|
| Incoloy® 800H | Balance | 30.52 | 20.47 | 0.58 | 0.50 | 0.07 |

The corrosion rate of the nickel-based alloy was less than 10 % after applying the electrochemical process according to the present disclosure compared to non-purified melts. Melts within the meaning of the present application are melts of a halogen salt or melts of mixtures of two or more halogen salts.

The method of the present disclosure takes place under an inert atmosphere. The inert atmosphere avoids the contact of molten salt with water and/or oxygen during the electrochemical process. Said contact would lead to the formation of impurities again and thus an increase of the corrosion rate. As used herein, an inert atmosphere is an atmosphere which is essentially free of water and/or oxygen, especially it is free of water and oxygen. Suitable inert atmospheres may be obtained by working under nitrogen or argon atmosphere.

For the method of the present application, the cathode and the reference electrode may be inert in respect to the molten halogen salt. Thus, there may not be any chemical reactions between the cathode and the molten salt or the reference electrode and the molten salt. Thus, in some embodiments of the present disclosure, the materials selected for constructing the cathode and the reference electrode may depend on the molten salt selected. The materials for the at least one cathode and the reference electrode may include at least one of tungsten, silver, gold, platinum, palladium, and/or nickel and/or alloys thereof. In general, cathodes and reference electrodes constructed to include tungsten have been shown to be inert against essentially all halogen salts which may be used as high-temperature storage material. Chloride salts do not react with tungsten electrodes, for the conditions tested herein. Therefore, in some embodiments, at least one cathode and the at least one reference electrode may include tungsten. A thermal energy storage or heat transfer fluid system itself (e.g. 1.44xx, 1.45xx, 1.78xx, 2.xxxx) may also act as a cathode.

In the present disclosure, the electrochemical system for purifying the molten chloride salt also includes an anode between which the current is flowing and where the oxidation reactions, which balances the reduction reactions of impurities occurring at the cathode. The material for the anode in the electrochemical process may be a liquid and/or a solid during the electrochemical process. The anode may include at least one of an alkali metal (e.g. Li, Na, and/or K), an alkaline earth metal (e.g. Mg, Ca, Sr, and/or Ba), a transition metal (e.g. Al, Co, Ni, Fe, and/or Zn), or a metalloid (e.g. B, and/or Si).

According to some embodiments of the present disclosure, the device may contain one anode and one cathode. In other embodiments, the device may comprise a plurality of anodes and cathodes.

Without being limited to said theory, it is assumed that the following reactions take place at the cathode and the anode respectively. The reactions shown below are halogen salts reacted according to the present disclosure. A may be an alkali metal, an alkaline earth metal, a transition metal, or a metalloid. B may be a halogen ion. The reaction coefficients may be adjusted based on the charges of A and B. The coefficients here are for demonstration only and are not meant to be limiting.

| | | |
|---|---|---|
| Electrolyte Reaction 1: | 2AOHB = 2AOH⁺ + 2B⁻ | (IA) |
| Cathode (Reduction) | 2AOH⁺ + 2e⁻ = 2AO + H₂ | (IIA) |
| Anode (Oxidation) | A = A²⁺ + 2e⁻ | (IIIA) |
| Electrolyte Reaction 2: | A²⁺ + 2B⁻ = AB₂ | (IVA) |
| Total Reaction: | 2AOHB + A = AB₂ + 2AO + H₂ | (VA) |

The reactions below are shown for MgOHCl as a typical representative of an impurity of MgCl₂, where MgCl₂ is one possible halogen salt according to the present disclosure.

| | | |
|---|---|---|
| Electrolyte Reaction 1: | 2MgOHCl = 2MgOH⁺ + 2Cl⁻ | (I) |
| Cathode (Reduction): | 2MgOH⁺ + 2e⁻ = 2MgO(s) +H₂(g) | (II) |
| Anode (Oxidation): | Mg(s) = Mg²⁺ + 2e⁻ | (III) |
| Electrolyte Reaction 2: | Mg²⁺ + 2Cl⁻ = MgCl₂ | (IV) |
| Total Reaction: | 2MgOHCl + Mg(s) = MgCl₂ + 2MgO(s) + H₂(g) | (V) |

MgOHCl is one representative example for a corrosive species in a melt of salts. In the melt, MgOHCl is present as MgOH⁺ and Cl⁻ (Electrolyte Reaction I). If a current is applied the corrosive species reacts at the electrode, namely the cathode, to MgO. MgO is hardly soluble in the melt of halogen salts. It either remains at the cathode or precipitates in the electrochemical reactor.

While MgO is formed at the cathode, at the same time Mg²⁺ is formed at the anode, resulting in the Mg²⁺ being available to react with the Cl⁻ present in the melt (Electrolyte Reaction II). In total, the impurity reacts with the cathode to an insoluble product (here: MgO). Further products - here H₂ - may escape.

As depicted above, at the cathode, the impurities are removed whereas at the anode new materials are released. Therefore, the material of the anode may be selected from a material which, after forming a halogen salt, then becomes part of the molten halogen salt. If the anode is constructed using an alkali metal, the electrochemical process may be performed with a liquid anode.

The purification process takes place in the "cold part" of a molten halogen salt. As used herein, "cold part" means that the halogen salt does not reach its maximum temperature but does still transform to a molten state. Therefore, the temperature may be within a range of from 300 °C to 800 °C. In some embodiments, temperature at which the method of the present disclosure takes place may be within a range between 390 °C and 650 °C (melting point of Mg metal, the preferred anode material), or between 450 °C and 600 °C, or above 480 °C, or below 550 °C, or at about 500 °C.

When alkali metals, such as Li, Na, and/or K, are used as electrodes, namely as anodes, they may be liquid, depending on the operating temperatures. Thus, in some embodiments of the present disclosure, the anode may be in the liquid phase. A liquid anode can avoid or minimize solidification problems of the dissolved metal. A density difference between molten salt and liquid alkali metal may be utilized. The lightweight alkali metal may float on the surface of the molten salt. The alkali metal may be the same type of cation as that of the molten salt to avoid producing a cation different from the cations of the molten salt, which may change the properties of the molten salt significantly.

Alternatively, the electrochemical purification may be done by using anodes with high melting temperature such as at least one of Mg, Zr, Si, Al, and/or Zn. With impurities like O²⁻ and OH⁻ in the molten salts, these elements form stable oxide compounds with a low solubility (e.g., MgO) in the molten halogen salts, especially chloride salts, at the anodes. In addition, oxide compounds with a low solubility are also formed because of the electrochemical reaction shown above (Reaction II at the cathode). The oxide may therefore not be part of the molten halogen salt and may be easily separated from the salt. Further, the oxide compounds that may form on the surface of the alloy (the material of the tank in which the method of the present application takes place) may result in a protective coating that minimizes or eliminates the corrosion of the alloy by the molten salt. A thermal energy storage or heat transfer fluid system itself (e.g. 1.44xx, 1.45xx, 1.78xx, 2.xxxx) may also act as a cathode. In this way the formed MgO layer is deposited directly on the construction material with a protective function.

The anode in the electrochemical process may be an alkaline earth metal. In some embodiments, the anode may include Mg. Thus, in some embodiments of the present disclosure, Mg may be used as the anode in the electrochemical purification process of molten salts. Mg, in the form of MgCl₂, may be used as part of the molten halogen salts in high temperature applications. This means that the material for an anode may be dependent on their halogen salt to be purified. The material of the anode may be a cation of a halogen salt used as molten halogen salt.

In some embodiments, the reactions shown above proceeds forward at temperatures in the range between 390 °C and below 650 °C. Above said temperature, Mg may be liquid. Below 390°C usual salt mixtures, such as a mixture of NaCl, KCl and MgCl₂ and/or CaCl₂ would be solid. In some embodiments of the present disclosure, the salt may be in a molten from, i.e., liquid, the temperature has to be above the melting temperature of the salt/salt mixture. In some embodiments, the temperature may be between 400°C and 600 °C. A, further advantage of the electrochemical process as described so far is that the production of toxic gases on the anode, e.g., Cl₂, may be avoided.

Using a solid anode, i.e. a material for the anode being solid at the above-mentioned temperature working range, has the further advantage that there is no solidification problem of dissolved alloy materials in pipelines in case the operation temperature is below the melting point of the anode material. This is especially true for Mg with a melting temperature of 650 °C which is in the anticipated operation temperature window from 400 to 700 °C. Therefore, Mg-electrodes may be utilized in the cold section of the thermal energy storage and heat transfer fluid system.

The new developed technology for in situ monitoring the impurities based on cyclic voltammetry enables an efficient and automated corrosion control system for molten halogen salts especially for molten chloride salts.

In the method according to the present disclosure, an electrochemical process is applied. This means that a current is between an anode and a cathode is applied. The amount of the current is compared to the current between the anode and a reference electrode. In the present case, an over-potential is applied to the molten salt to be cleaned. The over-potential means that the potential between the anode and the cathode compared to the potential applied between anode and the reference electrode is to be compared.

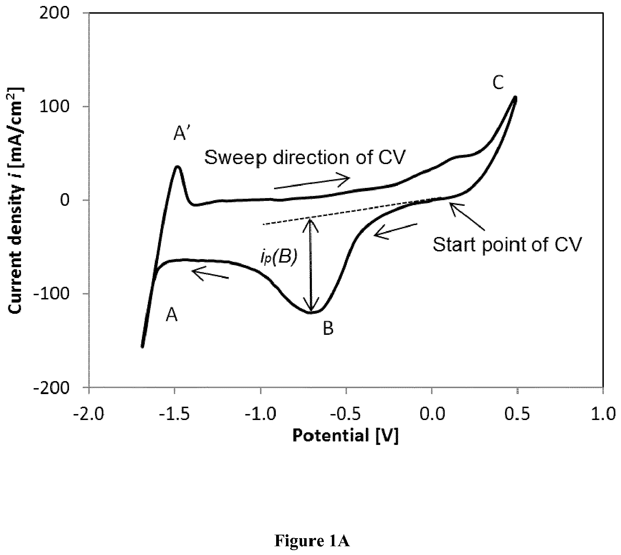

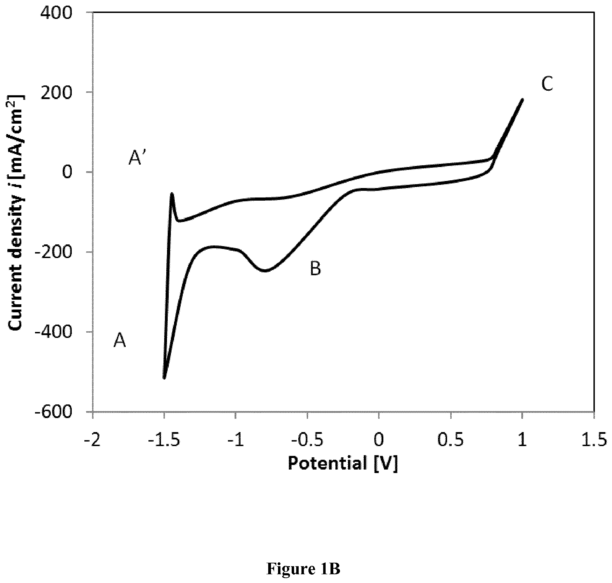

The applied voltage level for the over potential depends on the electrode material. In some embodiments, explained in more detail below, the method according to the present disclosure also comprises monitoring the success of the cleaning by cyclic voltammetry (CV). Figure 1A is a CV with a tungsten working electrode and Figure 1B shows a CV with a glassy carbon working electrode.

There are two characteristic peaks A and B (see Figure 1) in CV measurements, which represent the electrochemical reduction reactions of Mg²⁺ to Mg and MgOH⁺ to H₂ and MgO (i.e. Reaction II), respectively. For electrochemical purification the applied voltage is in the range between these two peaks, so that substantially only the reduction reaction of MgOH⁺ to H₂ and MgO takes place. Ideally, a voltage slightly more positive than peak A is utilized. Slightly more positive within the meaning of the present disclosure means that the applied voltage (over-potential) is approximately 1% to 30% above the one of peak A. In some embodiments the over-potential may be approximately 2% to 10%. For instance, the applied voltage for the electrochemical purification is suggested to be -1.4 V (vs. tungsten reference electrode), when the working electrode is tungsten.

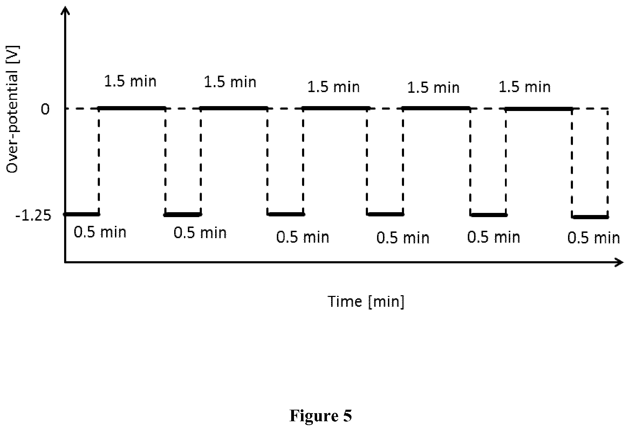

The over-potential may be applied periodically or constant, i.e. the over-potential may be used with a constant function or alternating current (AC). A stepwise function e.g., as shown in Fig. 5, or alternating current, meaning a non-constant periodically application of the over-potential, has the advantage, that the anode and cathode are not passivated by the forming oxides with a low solubility (e.g. MgO according to the above reaction II).

During electrochemical purification, MgO deposits on the anode and cathode. Deposition of MgO leads to the passivation of the electrode, thus a reduction of the current and a lower electrochemical purification rate and efficiency. Experiments showed that larger currents could be regained due to falling off of the MgO block from the electrode surface, when the applied voltage was stopped (i.e. 0 V) for a duration. The duration of the electrochemical purification is determined by current measurement over time. If for example the current dropped to 10 % compared to the initial value, the applied voltage was stopped e.g., for more than one minute. This is depending on the concentration of MgOH⁺, the size of the electrodes, temperature and so on. Thus, the drop of the current and the therefrom resulting stop of the applied voltage is depending on the system and may be determined by the skilled person. As an average, a drop of 10% is a value to start with which works for many systems. Overall, the process of periodic voltage levels allows for a higher purification rate compared to a constantly applied voltage.

By applying a non-constant over-potential, it was surprisingly found that this passivation may be avoided or at least significantly reduced. Therefore, the over-potential may be applied periodically.

The method according to the present disclosure may be included in a usual existing plant. It may be the part of a batch process. It may be part of a continuous process in which the molten salt is continuously be claimed by the process according to the present disclosure. Thus, the purification may take place in a flow of the molten halogen salt. In this way, a specially designed purification device allows for the effective purification of a large amount of salt mass (e.g. several 1000 tons) in a thermal energy storage and heat transfer fluid system.

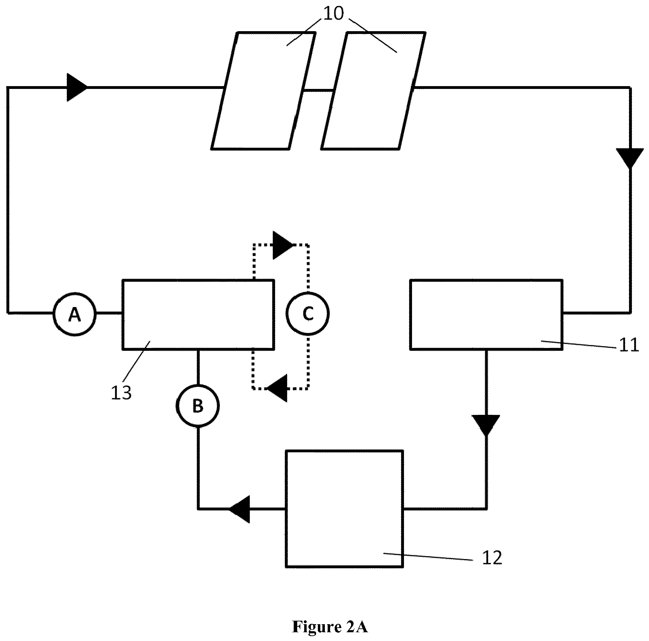

The electrochemical process may be included at different positions. It may be cleaned prior to feeding the molten salt into a cold tank or it might be applied during operation inside the storage tank or applying of the storage tank. Figure 2A shows illustrative different possibilities.

One possible use for the method according to the present application is for salt as heat storage or heat transfer fluid material in a concentrated solar power (CSP) plant. As shown in Figure 2A, the receiver (10) of the CSP collects the solar energy. The molten salt from the cold tank (13) is heated when flowing in pipes through the receiver (shown as lines with arrows indicating the flow direction of the molten halogen salt) to a tank (11) for the hot salt (hot tank). Usually, the hot salt flows through a power block (12) back to a cold tank (13) in which the cooled salt is stored (cold tank) prior to its use again. The arrows indicate the flow of the salt.

The CV measurements corresponding to Figure 2A is shown in Figure 1B. In this cycle, the electrochemical process of the present application may be introduced at different positions. They are indicated with "A", "B" and "C". In one embodiment, the electrochemical process of the disclosure takes place at one of "A", "B", and "C" respectively. It is also within the scope of the present disclosure that the electrochemical purification is applied at two or even all the three positions "A", "B", and "C". As the electrochemical purification according to the present disclosure is effective, one electrochemical process is usually sufficient. But there is the advantage if two or three positions are used for the method of the disclosure, also a leakage in the system may be controlled and monitored. Thus, if all three positions "A", "B", and "C" are used, it is possible to monitor the impurities at all the three positions. This is preferable to ensure that the molten salt is not corrosive at any of these positions. In general, where the corrosive impurities have the highest concentration is the best place for purification, as there the purification is the most efficient. In all the cases, there is a flow of the molten salt through the electrochemical process. This flow may be initiated by a pump, which is not shown in the figure.

In case "A", the electrochemical process is applied to the molten salt after the cold tank (13). Thus, the salt is cleaned on its way to the receiver (10). In case "B", the electrochemical process is applied to the molten salt between the power block (12) and the cold tank (13).

Additional pipes are shown as dotted lines in Figure 2A. Here, the molten halogen salt is pumped in a circle during the storage in the cold tank (13).

In one embodiment, the cleaning efficiency of the electrochemical process is controlled, especially in situ. Cyclic voltammetry enables a respective control. Compared to ex-situ analytical methods, the method of the present disclosure thus provides the unique possibility to monitor the cleaning effectiveness of molten salts during the process.

The method according to the present disclosure enables the reduction of corrosiveness of molten halogen salts, especially of molten chloride salts, against all kinds of alloys usually used in high temperature applications, such as 1.44xx, 1.45xx, 1.48xx and 2.xxx alloys.

In second aspect, the object of the present application is solved by a device for the purification of molten halogen salts which are used as high temperature heat storage material, said device comprising at least one cyclic voltammetry measurement (CVM) device and at least one electrochemical purification (ECP) device, said electrochemical purification device comprising an anode, a cathode and reference electrode. The device may comprise two CVM devices wherein the first CVM device is located on one side of the ECP device and the second CVM device is located on the opposite site of the ECP device. In a continuous process where is a flow of the molten halogen salts, this device may enable the unpurified salt is first measured by the first CVM device. Afterwards the halogen salt is purified by the ECP device and after the purification it is again measured with the CVM device. This enables the control of the purification process so it may be controlled so the process still works, and that the anode and the cathode are still in a good shape.

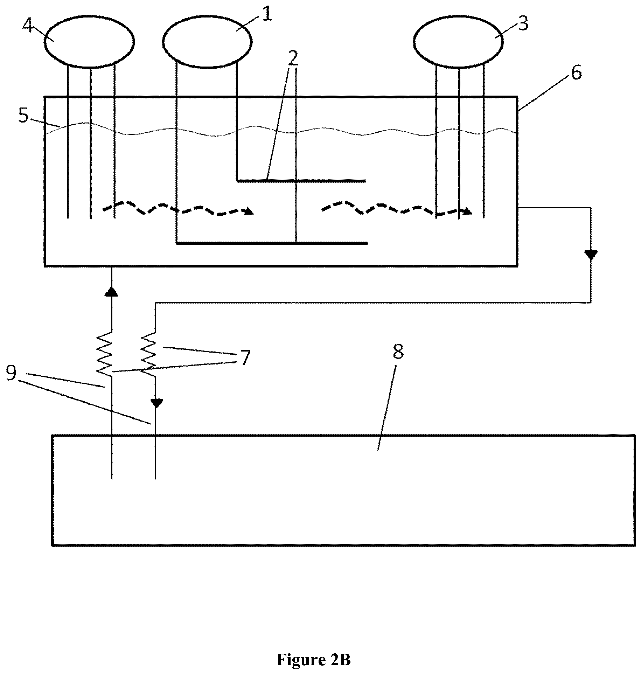

Figure 2B schematically shows one embodiment of the device. The ECP (1) comprises electrodes (2). These are in a container (6). This container has an interface (5) between the inert cover gas and the molten halogen salt. The electrodes (2) are inside the molten salt. To control the effectiveness of the electrochemical process, the device has a first CV (4) and a second CV (3). The first CV (4) is located prior to the ECP (1), the second CV (3) after the ECP (1). Prior to and after means the direction of the flow of the molten salt, which is depicted with dotted lines inside the container (6) and with arrows in the pipes (9).

After having contact with the electrodes (2) of the ECP (1), the molten salt is flowing towards the system in which it is used, e.g., a molten salt TES system (8), which may be e.g., a cold tank (13) as shown in Figure 2A. The molten salt may pass by a heat exchanger (7) in order that the molten salt flowing in the purification device has the desired temperature. The flow may be induced again by a pump which is not shown in the figure.

In some embodiments, the device may further comprise a gravimetric drainage. Said drainage of the container or tank in which the molten salt is and in which the method according to the present disclosure takes place is to remove the molten salt to replace or clean the electrodes of the CVMs and ECP.

In some embodiments, the device comprises at least one heat exchanger (7) which improves the energy efficiency of the device for purification, if the device for purification operates at another temperature than the thermal energy storage (TES) system. The heat exchanger may be a counter flow exchanger.

A temperature control unit may be part of the device. Such a temperature control unit enables the optimization of the ECP temperature and hence the ECP effectiveness. The device may include a molten salt cold trap in the loop with a wall temperature close to the liquid's temperature for additional cleaning. The gravimetric drainage of the device may remove the molten salt to replace or clean the trap.

The electrodes of the ECP may include at least one anode, at least one cathode, and reference electrode. The electrodes may have a large surface (e.g. at least 1 m² for a CSP plant with several thousand tons of molten salt) made of plates or rods so that they have a large contact area with molten salt mixture. They may be in the form of plates, measures, perforated plates or foams. This enables good contact and thus a good flow of the current between the electrodes and the molten salts. In the following example, the present disclosure is further defined without limiting the scope of the disclosure. Further, any features discussed for one embodiment may of course also be used in any other embodiment. Any disclosed features may be combined with other features as well. The most important features and items will be summarized after the examples again.

### Example:

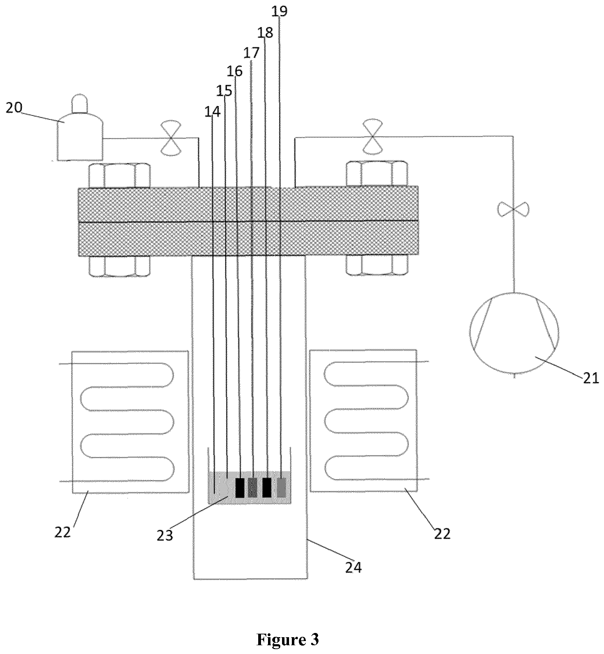

As shown in Figure 3, an autoclave apparatus was used for the investigation which consists of the following components: tube furnace (22), measuring control technology including temperature measurement, metallic container (24), sample crucible which is inert to the salts, atmosphere (inert gas (gas tank 20), vacuum (vacuum pump 21), storage material and electrodes (14: tungsten reference electrode, 15: tungsten working electrode for cyclic voltammetry, 16: tungsten counter electrode for cyclic voltammetry and potentiodynamic polarization measurements, 17: studied alloy sample as working electrode for potentiodynamic polarization measurements, 18: tungsten cathode for salt purification, 19: Bulk Mg anode for salt purification). The material of the autoclave was the alloy 1.4876 (Incoloy® 800H).

Cyclic voltammetry was used to monitor the impurity concentration before and after the electrochemical salt purification using bulk Mg anode, while the potentiodynamic polarization measurements were used to measure the corrosion rates of the alloy (here 1.4876, i.e., Incoloy® 800H) in the melt with various impurity concentrations. The pure tungsten wire purchased from Alfa Aesar (99.95 %, diameter: 1 mm) were applied in this example as the working, counter and reference electrodes for the concentration measurements on hydroxide species. Moreover, two tungsten wires were immersed in the molten salts as shown in Figure 3, which have larger contact areas than the working electrode. They are served as the counter and reference electrode, respectively.

As an example, a mixture of NaCl/KCl/MgCl₂ (20/20/60 mole%, with a small amount of MgCl₂ hydrate due to short-time contact of anhydrous MgCl₂ with air) was used as salt-mixture. After vacuum treatment using the autoclave shown in Figure 3, the salt mixture (∼140 g) in an inert crucible was heated to 200°C and kept at 200°C for an hour to release the hydrated water and reduce the side reaction to hydroxides. After that, the salt mixture was heated to 500°C to obtain a melt of the salt.

For the cyclic voltammetry (CV) measurement, a high temperature resistance glassy carbon crucible purchased from HTW Germany (Sigradur® G) was used to avoid the reaction of the molten salts with the materials of the crucible. During the experiments, the temperature of the molten salts in an argon atmosphere was controlled by a programmable furnace and a thermocouple close to the surface of the molten salt. In the CV experiments, the immersion depth of the working electrode was fixed to 5 mm by using an ohmmeter (the contact area of the tungsten and glassy carbon working electrode with the melt is 16.5 mm2), while the counter and reference electrodes had a much larger contact area of about 50 mm2. The CV experiments were conducted using a ZENNIUM electrochemical workstation from Zahner GmbH (Germany).

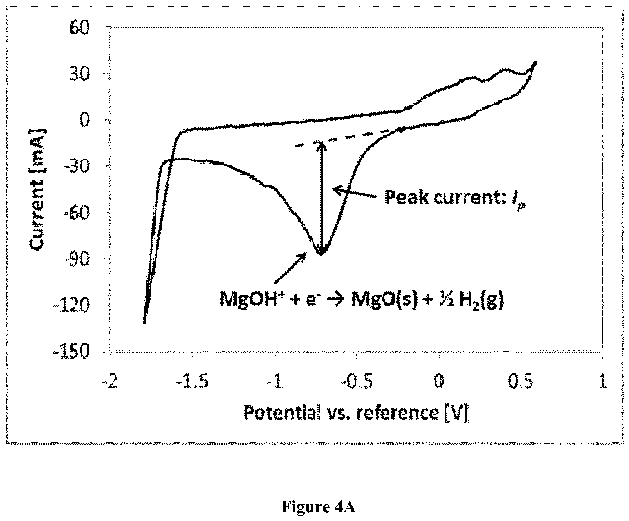

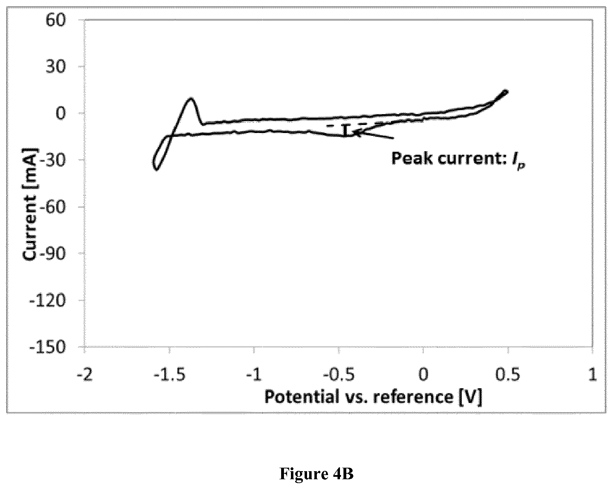

As shown in Figure 4A, a significant peak representing the reduction of MgOH⁺ to MgO and H₂ was observed in the cyclic voltammogram. The peak current was ∼100 mA, i.e., the peak current density was ∼625 mA/cm², as the contact area of the working electrode with the melt was 0.165 cm². This represented that the concentration of MgOH⁺ in the melt was ∼20000 ppm, as the peak current density is proportional to the concentration of MgOH⁺. After 10.5 min stepwise electrochemical salt purification using the over-potential according to Figure 5 (there is an interval of 1.5 min between 0.5 min electrochemical salt purification steps for avoiding the cathode passivation by the produced MgO via MgOH⁺ + e⁻ = MgO + ½ H₂), the peak current representing the reduction of MgOH⁺ was reduced to ∼5 mA (see Figure 4B), i.e., the concentration of MgOH⁺ in the melt was reduced to ∼1000 ppm (∼5% of that in unpurified melt). The potential sweep rate applied in all CV measurements here was 200 mV/s.

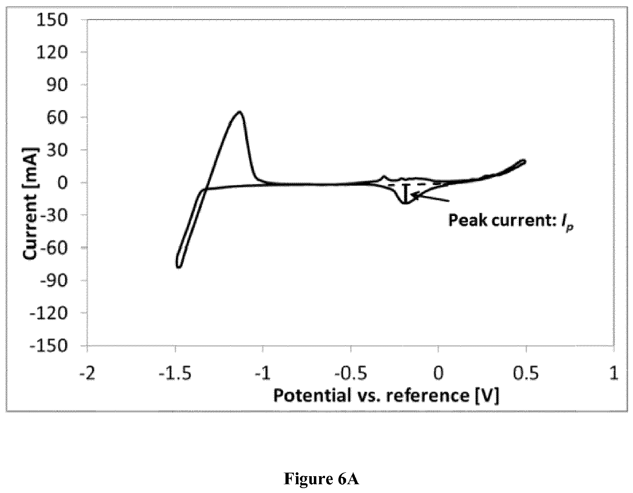

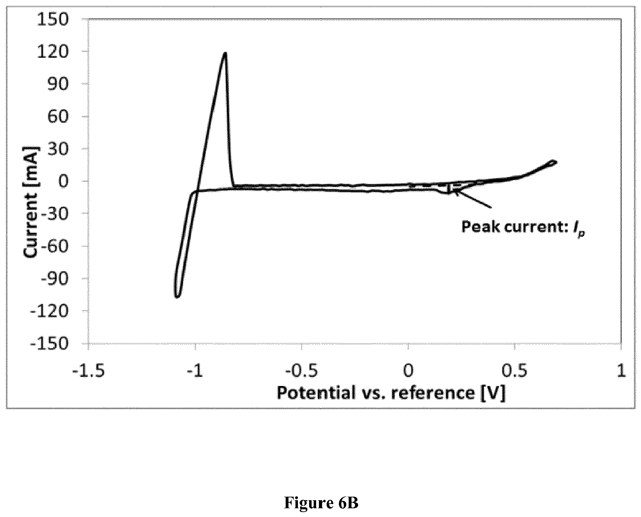

As a comparison of the corrosiveness of the unpurified and purified salts at high temperatures, both salts were heated to 700°C. Figure 6A and Figure 6B show that the impurity MgOH⁺ in the unpurified salt had a reduced concentration of ∼1200 ppm (peak current of -20 mA) at 700 °C compared to ∼20000 ppm at 500°C due to decomposition of MgOH⁺Cl⁻ to MgO and HCl, while the impurity MgOH⁺ concentration in the purified salt was reduced from ∼1000 ppm to ∼170 ppm (peak current of ∼3 mA).

Figure 6A and Figure 6B show CVs of molten NaCl/KCl/MgCl₂ (20/20/60 mole%) at 700°C, with Figure 6A showing the CV of the unpurified salt and Figure 6B of the salt purified electrochemically using bulk magnesium as the anode at 500°C according to the present disclosure. The potential sweep rate was 200 mV/s, the working electrode (cathode) was tungsten with a 0.165 cm² contact area with the melt; the reference electrode was tungsten immersed in the melt.

Details about CV measurements for the impurities in molten salt mixtures are published by W. Ding et al. (Electrochemical Measurement of Corrosive impurities in molten chlorides for thermal energy storage, Journal of Energy Storage. 2018; 15:408-414).

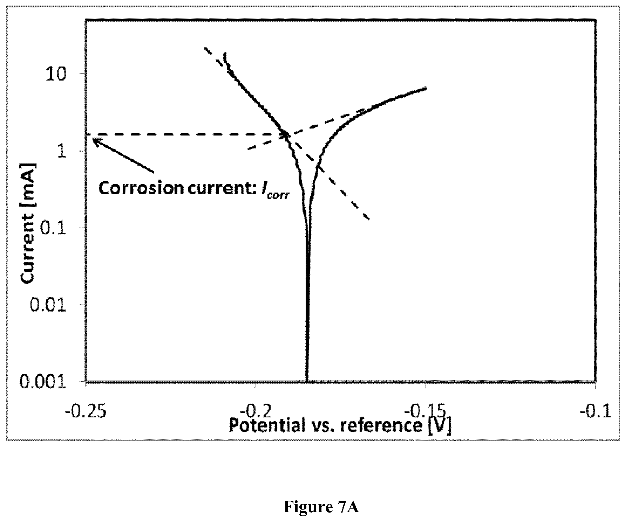

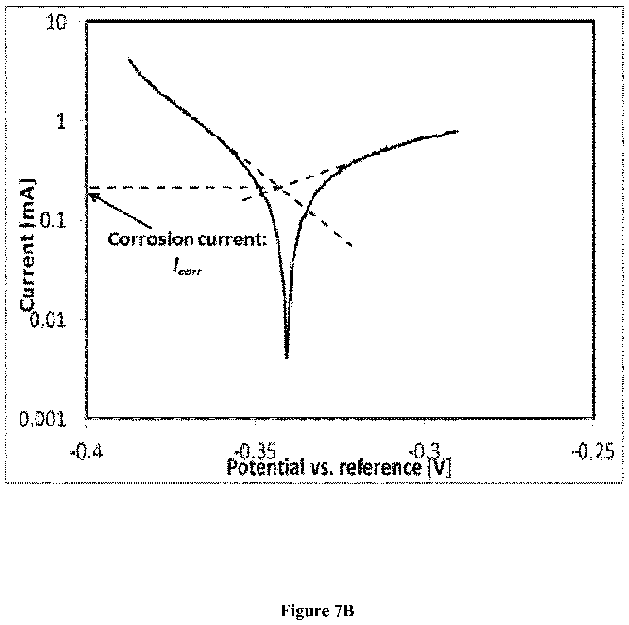

Figure 7A and Figure 7B show the potentiodynamic polarization curves of Incoloy 800H in the unpurified (Figure 7A) and purified (Figure 7B) salts at 700°C. The corrosion current of Incoloy 800H in the unpurified salt (contact area ∼7.5 cm²) obtained from the potentiodynamic polarization curve via Tafel lines was ∼2 mA (corrosion current density of ∼263 µA/cm²), which represented a corrosion rate of -3100 µm/year according to Faraday law. The corrosion current of Incoloy 800H in the purified salt (contact area ∼7.5 cm²) was significantly reduced to ∼200 µA (corrosion current density of ∼26 µA/cm²), i.e., the corrosion rate was ∼310 µm/year, ∼10% of that in the unpurified salt.

The corrosion of Incoloy 800H was also performed in post-analysis examination, where the steel was analyzed with SEM and EDX measurements after being exposed to the molten salt with and without electrochemical treatment of the melt according to the present disclosure. Microstructural analysis on the alloy samples via SEM and EDX showed that the corrosion layer was ∼70 µm after immersion in the molten salt without electrochemical purification for 500h at 700°C, while the corrosion layer was reduced to ∼10 µm in the molten salt after the electrochemical purification.

Thus, the method of the present disclosure enables a fast and secure method of reducing impurities in molten salts at high temperatures to significantly reduce their corrosiveness in high temperature applications. At the same time, the effectiveness of the cleaning may be controlled in situ by CV measurements.

## Claims

1. A method comprising:
providing an electrochemical system comprising an anode and a cathode and a molten salt containing at least one oxygen impurity;
exposing the molten salt to a voltage;
contacting the cathode and the anode physically and electrically with the molten salt; and
removing at least a portion of the at least one oxygen impurity.

2. The method of claim 1, wherein the molten salt comprises a halogen salt, preferably a chloride salt.

3. The method of claim 1 or 2, wherein the exposing is performed at a temperature between 300 °C and 800 °C.

4. The method according to any of claims 1 to 3, wherein the exposing is performed in an inert atmosphere.

5. The method according to any of claims 1 to 4, wherein the material for an anode in the electrochemical process is selected from an alkali metal, e.g. Li, Na, K, an alkaline earth metal (e.g. Mg, Ca, Sr, Ba), a transition metal (e.g. Co, Ni, Fe, Zn), or a metalloid (e.g. B or Si).

6. The method according to any of claims 1 to 5, wherein the cathode is solid or liquid at the temperature at which the electrochemical process takes place.

7. The method according to any of claims 1 to 6, wherein the construction material of a container in which the electrochemical reaction takes place acts as cathode.

8. The method according to any of claims 1 to 7, wherein the molten salt is purified prior to feeding it into a tank.

9. The method according to any of claims 1 to 8, wherein the molten salt is purified during operation inside a storage tank.

10. The method according to any of claims 1 to 9, wherein the molten salt is purified when flowing in or out of a storage tank.

11. The method according to any of claims 1 to 10, further comprising purification in a flow of the molten halogen salt.

12. The method according to any of claims 1 to 11, further comprising controlling the effort of the electrochemical process, especially via cyclic voltammetry.

13. A device for the purification of molten halogen salts as high-temperature heat storage or heat transfer fluid material comprising at least one cyclic voltammetry measurement (CVM) device and at least one electrochemical purification (ECP) device, said electrochemical purification device comprises an anode, a cathode, and a reference electrode.

14. The device according to claim 13 further comprising two CVM devices, wherein the first CVM device is located on one side of the ECP device and the second CVM device is located on the opposite side of the ECP device.

15. The device according to claim 13 or 14, further comprising a gravimetric drainage.

16. The device according to any of claims 13 to 15, further comprising one or more of a heat exchanger, a temperature control unit, and/or a cold trap for molten salt.
